# EUROPEAN PATENT APPLICATION

(11) **EP 4 693 603 A2**
(43) Date of publication of application: **11.02.2026**
(21) Application number: 25170382.3
(22) Date of filing: 14.04.2025
(51) Int. Cl.: H01M 10/48, H01M 10/613, H01M 10/625, H01M 10/6554, H01M 10/6556, H01M 10/6568, H01M 50/204, H01M 50/249, H01M 50/342, H01M 50/367, H01M 50/505, H01M 50/534, H01M 50/574

(54) **INTEGRATED BATTERY PACK AND ELECTRIC VEHICLE**

(30) Priority: 06.08.2024 CN 202421894953 U; 29.10.2024 WO PCT/CN2024/128019
(71) Applicant: Eve Energy Co., Ltd., Huizhou, Guangdong 516006 (CN)
(72) Inventor: ZHOU, Hongquan, Huizhou, 516006 (CN); WANG, Feichuang, Huizhou, 516006 (CN); ZHONG, Yu, Huizhou, 516006 (CN)
(74) Representative: HGF

(57) **Abstract**

An integrated battery pack includes a box body (1) provided with a receiving cavity (110), a battery module (2) arranged in the receiving cavity (110), and a liquid cooling plate (3) arranged below the battery module; where a pressure relief valve (22) is formed at a bottom of the battery module (2), a side surface of the battery module (2) having the pressure relief valve (22) abuts against the liquid cooling plate (3); a pressure relief channel (33) is formed in the liquid cooling plate (3); a pressure relief hole (30) is opened on a side surface of the liquid cooling plate (3) facing the battery module, and the pressure relief hole (30) is in communication with the pressure relief channel (33) and is arranged to face the pressure relief valve (22).

## Description

### TECHNICAL FIELD

The present application relates to the field of battery manufacturing and, in particular, to an integrated battery pack and an electric vehicle.

### BACKGROUND

With the rapid development and technology iteration of new energy vehicles, the industry puts forward higher requirements for light weight, safety, and manufacturing cost. Therefore, the Cell to Body (CTB) technology emerges as the times require. Through a vehicle-integrated design, the requirements of the market for the reduction in component types and the reduction in vehicle manufacturing costs are satisfied.

A CTB electric vehicle in the related art integrates the chassis of the vehicle with the box body of a battery pack, thereby greatly simplifying the structure of the vehicle.

Since the top of the box body of the battery pack forms the bottom of the passenger cabin of the vehicle, the high-temperature substances discharged from a pressure relief valve spread to the bottom of the passenger cabin when a battery module in the battery pack undergoes thermal runaway and directly cause a thermal impact on the passenger cabin, thereby failing to guarantee the thermal safety of the passenger cabin.

### SUMMARY

The present application provides an integrated battery pack. The integrated battery pack includes a box body provided with a receiving cavity, a battery module arranged in the receiving cavity, and a liquid cooling plate arranged below the battery module. A pressure relief valve is formed at the bottom of the battery module. A side surface of the battery module having the pressure relief valve abuts against the liquid cooling plate. A pressure relief channel is formed in the liquid cooling plate. A pressure relief hole is opened on a side surface of the liquid cooling plate facing the battery module, and the pressure relief hole is in communication with the pressure relief channel and is arranged to face the pressure relief valve.

The present application further provides an electric vehicle. The electric vehicle includes a vehicle body, a seat, and an integrated battery pack. The integrated battery pack is arranged on the vehicle body, and the seat is installed on the top of a box body of the integrated battery pack.

The present application has the beneficial effects below.

By setting the pressure relief valve at the bottom of the battery module, a high-temperature gas and other substances discharged when a battery cell releases pressure are kept away from the top of the box body, thereby reducing the thermal impact of high-temperature substances on the passenger cabin. Moreover, since the pressure relief channel for transporting high-temperature substances is arranged on the liquid cooling plate, the high-temperature gas discharged during pressure relief is also cooled down quickly while the high-temperature gas moves in the pressure relief channel, and the temperature inside the entire box body is reduced, thereby effectively reducing the thermal impact of the box body on the passenger cabin and improving the thermal safety performance of the passenger cabin.

### BRIEF DESCRIPTION OF DRAWINGS

FIG. 1 is an exploded view of an integrated battery pack according to some embodiments of the present application.
FIG. 2 is a top view of an integrated battery pack according to some embodiments of the present application.
FIG. 3 is a schematic view of a battery module and a liquid cooling plate according to some embodiments of the present application.
FIG. 4 is a partial section view of a battery module according to some embodiments of the present application.
FIG. 5 is a partial section view of an integrated battery pack according to some embodiments of the present application.
FIG. 6 is an enlarged view of the part at A in FIG. 5.
FIG. 7 is a structure view of a vehicle according to some embodiments of the present application.

In the drawings:
1. box body; 11. box bottom; 110. receiving cavity; 111. bottom plate; 112. side plate; 113. side beam; 12. box cover; 13. mounting bracket;
2. battery module; 21. battery cell; 22. pressure relief valve; 23. terminal; 24. CCS component; 25. insulating sheet;
3. liquid cooling plate; 30. pressure relief hole; 31. first plate; 32. second plate; 33. pressure relief channel; 34. liquid cooling channel;
4. batten strip; 41. support plate;
5. bottom guard plate;
6. BDU electrical component; 61. copper bar;
7. first buffer layer; 8. second buffer layer; 9. mounting slot; 10. vehicle body; 14. seat; 15. integrated battery pack.

### DETAILED DESCRIPTION

The solutions of the present application are described hereinafter in conjunction with drawings and embodiments.

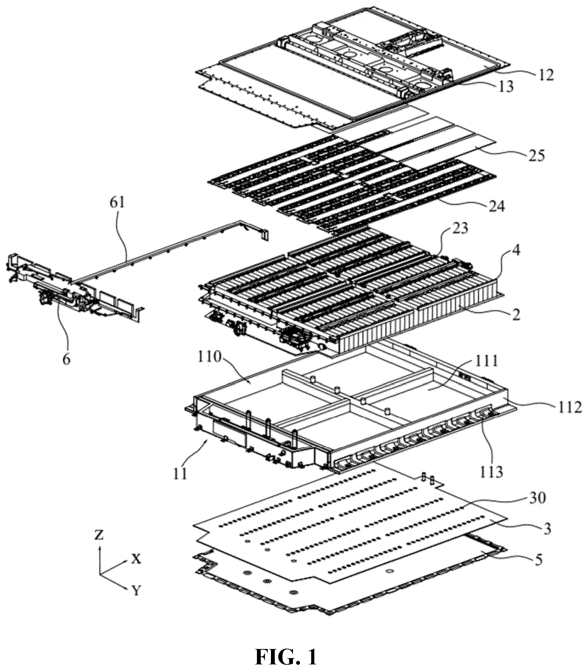

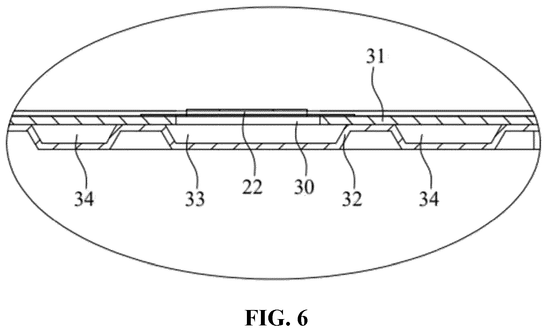

As shown in FIGS. 1, 5, and 6, the present application provides an integrated battery pack. The integrated battery pack includes a box body 1, a battery module 2, and a liquid cooling plate 3. The box body 1 is in a cuboid structure. The length direction of the box body 1 is the X direction shown in the figure, the width direction of the box body 1 is the Y direction shown in the figure, and the height direction of the box body 1 is the Z direction shown in the figure. The box body 1 is a hollow structure. The box body 1 is provided with a receiving cavity 110. The battery module 2 and the liquid cooling plate 3 are both mounted in the receiving cavity 110. The liquid cooling plate 3 is arranged below the battery module 2. Specifically, the liquid cooling plate 3 is arranged at the bottom of the box body 1, that is, the liquid cooling plate 3 is located at the bottom of the receiving cavity 110. The battery module 2 includes multiple battery cells 21. One end of the battery cell 21 has two terminals 23, and the two terminals 23 are a positive terminal and a negative terminal, respectively. A pressure relief valve 22 is arranged on one end of the battery cell 21 facing away from the terminals 23. When the battery module 2 undergoes thermal runaway, the pressure relief valve 22 is switched on to release a high-temperature gas and other substances (such as electrolyte) inside the battery cell 21. The orientation description in the embodiments is based on the orientation where the integrated battery pack is mounted on an electric vehicle, that is, the pressure relief valve 22 is located at the bottom of the battery module 2, and the terminals 23 are located at the top of the battery module 2. The battery module 2 is mounted on the liquid cooling plate 3. A side surface (that is, the bottom surface of the battery module 2) of the battery module 2 having the pressure relief valve 22 abuts against the liquid cooling plate 3 so that heat exchange is performed between the liquid cooling plate 3 and the battery module 2, thereby cooling the battery module 2. A pressure relief channel 33 is formed in the liquid cooling plate 3. A pressure relief hole 30 is opened on a side surface of the liquid cooling plate 3 facing the battery module 2. The pressure relief hole 30 is in communication with the pressure relief channel 33. The number of pressure relief holes 30 is the same as the number of pressure relief valves 22 in the battery module 2, and the positions of the pressure relief holes 30 are set in one-to-one correspondence with the positions of the pressure relief valves 22. The pressure relief hole 30 is arranged to face the corresponding pressure relief valve 22. When the battery module 2 undergoes thermal runaway, the high-temperature gas and other substances are discharged into the pressure relief channel 33 through the pressure relief valve 22 and the pressure relief hole 30 sequentially and finally transported to the outside of the box body 1 along the pressure relief channel 33.

It is to be understood that the integrated battery pack is mounted on the vehicle body of the electric vehicle, and the top of the box body 1 forms the bottom of the passenger cabin, thereby achieving the integral design of the vehicle chassis and the integrated battery pack. Since the pressure relief valve 22 is located at the bottom of the battery module 2, the high-temperature gas and other substances discharged when a battery cell 21 releases pressure are kept away from the top of the box body 1, thereby reducing the thermal impact of high-temperature substances on the passenger cabin. Moreover, since the pressure relief channel 33 for transporting high-temperature substances is arranged on the liquid cooling plate 3, the high-temperature gas discharged during pressure relief is also cooled down quickly while the high-temperature gas moves in the pressure relief channel 33, and the temperature inside the entire box body 1 is reduced, thereby effectively reducing the thermal impact of the box body 1 on the passenger cabin.

The box body 1 includes a box bottom 11 and a box cover 12. The box bottom 11 includes a bottom plate 111, four side plates 112, and one or more side beams 113. The bottom plate 111 is a square flat plate. The four side plates 112 are arranged around the bottom plate 111, and the receiving cavity 110 is enclosed by the bottom plate 111 and the four side plates 112. Two side plates 112 opposite to each other in the Y direction are configured in an "L" shape, that is, the two side plates 112 each include a vertical plate and a horizontal plate perpendicular to each other. The free end of the horizontal plate extends in a direction facing away from the receiving cavity 110. Multiple side beams 113 are arranged. The multiple side beams 113 are spaced on the "L"-shaped side plates 112, that is, each side beam 113 is fixed to both the vertical plate and the horizontal plate. The side beam 113 is prepared by rolling and is used for enhancing the structural strength of the box body 1, thereby preventing the box body 1 from deforming when the box body 1 is subjected to a side impact. The box cover 12 covers the top of the box bottom 11 so that the receiving cavity 110 is formed between the box cover 12 and the box bottom 11. A mounting support 13 is arranged on a side of the box cover 12 facing away from the box bottom 11, and the mounting support 13 is used for allowing a seat to be mounted. The box cover 12 and the box bottom 11 are fixed to each other by bolting, screwing, riveting or welding.

Optionally, the integrated battery pack further includes a bottom guard plate 5. The bottom guard plate 5 is sandwiched between the cavity bottom of the receiving cavity 110 and the liquid cooling plate 3. The bottom guard plate 5 serves to protect the liquid cooling plate 3, thereby preventing the liquid cooling plate 3 from being damaged due to impacts on the bottom plate 111 of the box body 1 when the electric vehicle hits the ground.

Optionally, the integrated battery pack further includes a battery disconnect unit (BDU) electrical component 6. The BDU electrical component 6 may be a BDU electrical component in the related art and is used for high voltage distribution. The BDU electrical component 6 is electrically connected to the battery module 2.

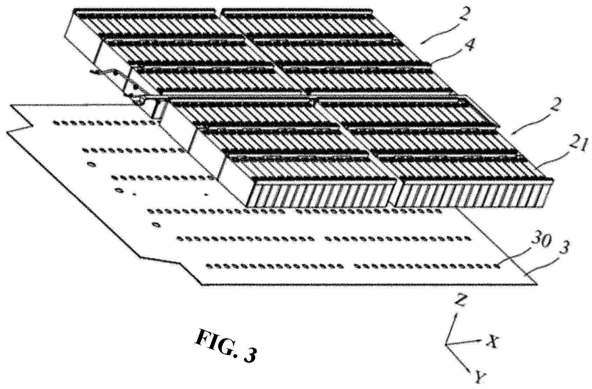

With reference to FIGS. 1 and 3, four battery modules 2 are arranged. The four battery modules 2 are arranged in a rectangular array. Of course, in some embodiments, the number of the battery modules 2 to be arranged and the arrangement form of the battery modules 2 may be flexibly selected according to the specific internal structure and the storage capacity of the integrated battery pack. The battery module 2 includes multiple battery groups sequentially arranged in the first direction (the Y direction shown in the figure). Each battery group includes multiple battery cells 21 sequentially arranged in a second direction (the X direction shown in the figure). In the embodiments, each battery module 2 includes four battery groups. The battery cell 21 is a square battery, and the top of the battery cell 21 is provided with a positive terminal and a negative terminal. In the same battery group, all the positive terminals are arranged in a line in the length direction of the box body 1, and all the negative terminals are arranged in a line in the length direction of the box body 1.

The battery module 2 further includes a cells contact system (CCS) component 24 and an insulating sheet 25. The CCS component 24 is connected to the terminals 23 of the battery cell 21 and is used for collecting voltage data, temperature data, and the like of the battery cell 21. The CCS component 24 is disposed on the top of the battery module 2. The insulating sheet 25 covers the CCS component 24 for insulation protection. The BDU electrical component 6 includes a copper bar 61. The length of the copper bar 61 extends in the length direction of the box body 1. The four battery modules 2 are arranged in groups of two, and two groups are arranged on both sides of the copper bar 61 so that the corresponding CCS component 24 on the four battery modules 2 may be connected to the copper bar 61.

With reference to FIGS. 3, 5, and 6, the pressure relief hole 30 on the liquid cooling plate 3 is covered with a mica sheet. The mica sheet is used for selectively blocking the pressure relief hole 30. The mica sheet has a thermal insulation effect and an isolation effect, thereby preventing the high-temperature substances discharged into the pressure relief channel 33 when a certain battery cell 21 releases pressure from causing a thermal impact and pollution on other surrounding battery cells 21 through the surrounding pressure relief hole 30. When the battery cell 21 releases pressure, the high-temperature, high-pressure gas may break through the mica sheet and enter the pressure relief channel 33 through the pressure relief hole 30.

Multiple liquid cooling channels 34 spaced in the first direction (the Y direction shown in the figure) are formed in the liquid cooling plate 3, and the pressure relief channel 33 is located between two adjacent liquid cooling channels 34. The liquid cooling plate 3 includes a first plate 31 and a second plate 32 that are stacked. Multiple grooves are formed on a side surface of the second plate 32 facing the battery module 2. The multiple grooves are spaced in the first direction. The length of the groove extends in the length direction of the box body 1. The first plate 31 is arranged on a side of the second plate 32 facing the battery module 2 and covers the notch of the groove. The first plate 31 is capable of blocking the notch of the groove so that the groove is in a closed state. The pressure relief channel 33 is enclosed by a part of the grooves and the first plate 31, and the pressure relief channel 33 is located directly below the pressure relief valve 22 of the battery module 2. The liquid cooling channels 34 are enclosed by the other part of the grooves and the first plate 31. The pressure relief hole 30 is opened on the first plate 31. The pressure relief hole 30 is located above the pressure relief channel 33. Correspondingly, a sidewall of the box body 1 is further provided with a pressure relief vent. The pressure relief channel 33 on the liquid cooling plate 3 is in communication with the pressure relief vent so that high-temperature gas and gas substances are discharged to the outside of the box body 1 through the pressure relief vent during pressure relief. The liquid cooling plate 3 is further provided with a liquid inlet and a liquid outlet which are in communication with the liquid cooling channels 34. The liquid inlet and the liquid outlet are both connected to an external coolant storage tank to achieve the circulation of the cooling liquid between the liquid cooling plate 3 and the coolant storage tank. In the embodiments, by arranging the pressure relief channel 33 between adjacent liquid cooling channels 34, the heat of the high-temperature substances in the pressure relief channel 33 is quickly absorbed through the liquid cooling channels 34, thereby quickly cooling the integrated battery pack. To facilitate the manufacturing of the second plate 32, the second plate 32 is repeatedly bent in the first direction, that is, the cross-section of the second plate 32 is "S"-shaped, so that multiple spaced grooves are formed on one side of the second plate 32.

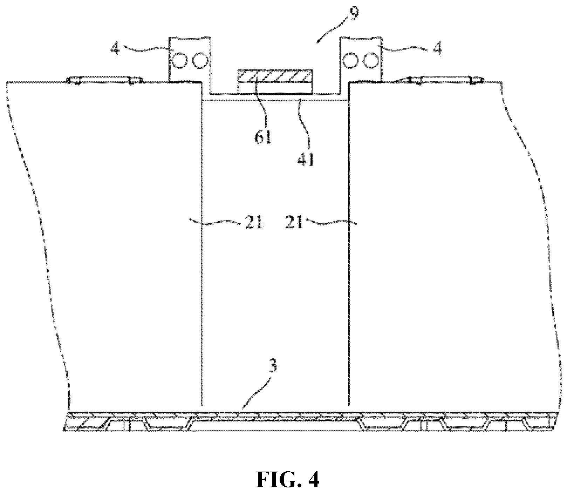

With reference to FIGS. 3 and 4, multiple batten strips 4 are spaced on the top of the battery module 2. Opposite ends of the batten strip 4 are connected to the battery module 2 and the inner wall of the box body 1, respectively. The batten strip 4 is a long columnar structure. The length of the batten strip 4 extends in the length direction of the box body 1. The multiple batten strips 4 are arranged in parallel and spaced apart from each other in the width direction of the box body 1. The batten strips 4 serve to support the box cover 12. When the box cover 12 is subjected to pressure from seats and passengers, the pressure is evenly distributed to the shells of multiple battery cells 21 through the batten strips 4, thereby preventing the top of the box body 1 from deforming due to concentrated force and avoiding circuit failure caused when the pressure from the box cover 12 is directly applied to the terminals 23 of the battery cells 21. Opposite ends of the batten strip 4 are fixed to the battery module 2 and the inner wall of the box body 1 by bonding, respectively. That is, the top end of the batten strip 4 is fixed to the inner wall of the box cover 12 through a structural adhesive, and the bottom end of the batten strip 4 is fixed to the battery module 2.

Multiple battery modules 2 are mounted in the box body 1. In the embodiments, the number of battery modules 2 is four. The four battery modules 2 are divided into two groups. The two groups of battery modules 2 are spaced in the first direction so that the copper bar 61 of the BDU electrical component 6 may be mounted between the two groups of battery modules 2. The above structure not only facilitates the connection between the copper bar 61 and the battery modules 2, but also saves space. In the first direction, a support plate 41 is provided between two adjacent battery modules 2. Two ends of the support plate 41 are connected to the batten strips 4 on two adjacent battery modules 2, respectively, and a mounting slot 9 is formed between the support plate 41 and the two batten strips 4. The copper bar 61 is mounted in the mounting slot 9. In another embodiment, the support plate 41 and the batten strips 4 may be integrally formed.

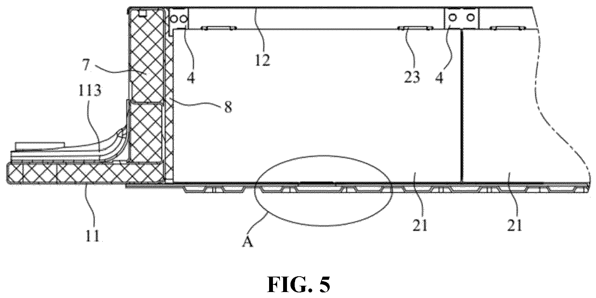

With reference to FIG. 5, the sidewall of the box body 1 is a hollow structure. Since the corresponding region of the receiving cavity 110 mainly exists on the box bottom 11, the sidewall of the box bottom 11 is set as a hollow structure. The sidewall of the box bottom 11 is filled with a first buffer layer 7. The first buffer layer 7 is foam and serves as a buffer to absorb energy. When the sidewall of the box body 1 is impacted by external forces, the first buffer layer 7 can provide buffer protection, thereby avoiding damage to the battery module 2 inside the box boy 1.

Optionally, a second buffer layer 8 is filled between the battery module 2 and the inner wall of the box body 1. Since the region corresponding to the receiving cavity 110 mainly exists on the box bottom 11, the second buffer layer 8 is arranged between the inner wall of the box bottom 11 and the battery module 2. The second buffer layer 8 is foam and serves as a buffer to absorb energy. When the sidewall of the box body 1 is impacted by external forces, the second buffer layer 8 provides buffer protection, thereby avoiding damage to the battery module 2 inside the box boy 1.

Adjacent battery cells 21 in the battery module 2 are fixed to each other through a structural adhesive. By filling the structural adhesive, the gap between adjacent battery cells 21 is eliminated so that all the battery cells 21 are integrally formed with each other, thereby improving the structural strength of the entire battery module 2 and enabling the entire battery module 2 to bear the pressure from the box cover 12.

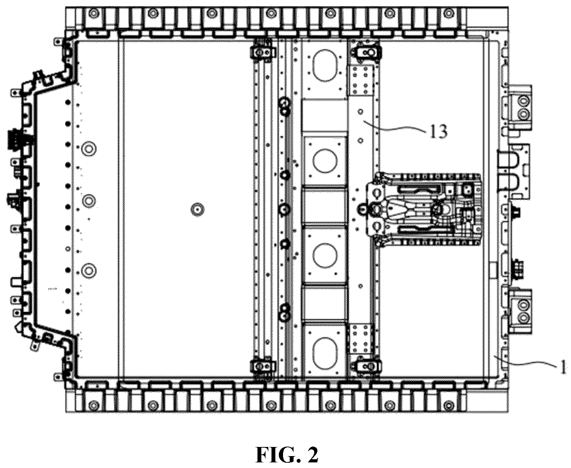

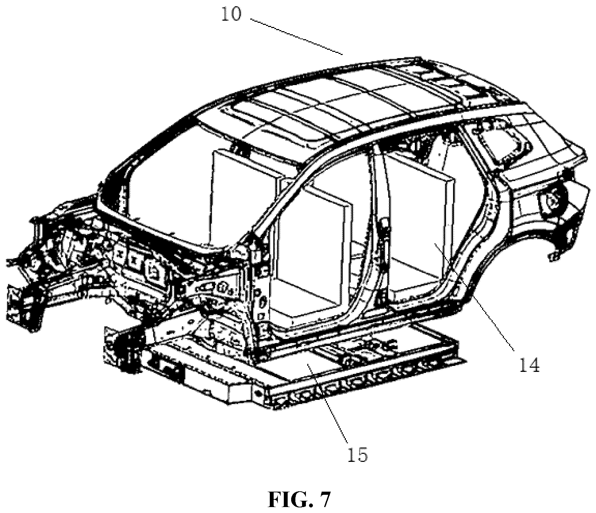

As shown in FIGS. 1, 2, and 7, an electric vehicle is further provided. The electric vehicle includes a vehicle body 10, a seat 14, and an integrated battery pack 15. The integrated battery pack 15 is mounted on the vehicle body 10. The top (that is, the box cover 12) of the box body 1 of the integrated battery pack 15 also serves as the bottom of the passenger cabin of the vehicle body 10, thereby simplifying the structure of the entire vehicle. The seat 14 is mounted on the mounting bracket 13 on the box cover 12. Since the pressure relief valve 22 of the battery module 2 is located at the bottom of the box body 1, the high-temperature gas discharged when a battery cell 21 releases pressure is discharged from the bottom region of the box body 1 to reduce the thermal impact of the high-temperature gas on the top region of the box body 1, thereby reducing the thermal impact from the inside of the box body 1 on the passenger cabin and improving the thermal safety performance of the passenger cabin.

In the embodiments, by setting the pressure relief valve 22 at the bottom of the battery module 2, a high-temperature gas and other substances discharged when a battery cell 21 releases pressure are kept away from the top of the box body 1, thereby reducing the thermal impact of high-temperature substances on the passenger cabin. Moreover, since the pressure relief channel 33 for transporting high-temperature substances is arranged on the liquid cooling plate 3, the high-temperature gas discharged during pressure relief is also cooled down quickly while the high-temperature gas moves in the pressure relief channel 33, and the temperature inside the entire box body 1 is reduced, thereby effectively reducing the thermal impact of the box body 1 on the passenger cabin and improving the thermal safety performance of the passenger cabin.

## Claims

1. An integrated battery pack, comprising:
a box body (1), provided with a receiving cavity (110);
a battery module (2), arranged in the receiving cavity (110); and
a liquid cooling plate (3), arranged below the battery module (2);
wherein a pressure relief valve (22) is formed at a bottom of the battery module (2), a side surface of the battery module (2) having the pressure relief valve (22) abuts against the liquid cooling plate (3);
a pressure relief channel (33) is formed in the liquid cooling plate (3); and
a pressure relief hole (30) is opened on a side surface of the liquid cooling plate (3) facing the battery module (2), and the pressure relief hole (30) is in communication with the pressure relief channel (33) and is arranged to face the pressure relief valve (22).

2. The integrated battery pack according to claim 1, wherein the liquid cooling plate (3) is arranged at a bottom of the box body (1).

3. The integrated battery pack according to claim 1, wherein the pressure relief hole (30) is covered with a mica sheet, and the mica sheet is used for selectively blocking the pressure relief hole (30).

4. The integrated battery pack according to claim 1, wherein a plurality of liquid cooling channels (34) spaced in a first direction are formed in the liquid cooling plate (3), and the pressure relief channel (33) is located between two adjacent liquid cooling channels (34) of the plurality of liquid cooling channels (34).

5. The integrated battery pack according to claim 4, wherein the liquid cooling plate (3) comprises a first plate (31) and a second plate (32) that are stacked;
a plurality of grooves spaced in the first direction are formed on a side surface of the second plate (32) facing the battery module (2);
the first plate (31) is arranged on a side of the second plate (32) facing the battery module (2), and the first plate (31) is capable of blocking a notch of a groove of the plurality of grooves;
the pressure relief channel (33) is enclosed by a part of the plurality of grooves and the first plate (31), the plurality of liquid cooling channels (34) are enclosed by another part of the plurality of grooves and the first plate (31); and
the pressure relief hole (30) is opened on the first plate (31).

6. The integrated battery pack according to any one of claims 1 to 5, wherein a plurality of batten strips (4) are spaced on a top of the battery module (2), and opposite ends of a batten strip (4) of the plurality of batten strips (4) are connected to the battery module (2) and an inner wall of the box body (1), respectively.

7. The integrated battery pack according to any one of claims 1 to 5, wherein the battery module (2) comprises a plurality of battery groups sequentially arranged in the first direction;
each of the plurality of battery groups comprises a plurality of battery cells (21) that are sequentially arranged in a second direction, and the first direction is perpendicular to the second direction; and
adjacent battery cells (21) of the plurality of battery cells (21) are bonded through a structural adhesive.

8. The integrated battery pack according to any one of claims 1 to 5, wherein a sidewall of the box body (1) is a hollow structure, and the sidewall of the box body (1) is filled with a first buffer layer (7).

9. The integrated battery pack according to any one of claims 1 to 5, wherein a second buffer layer (8) is filled between the battery module (2) and an inner wall of the box body (1).

10. The integrated battery pack according to any one of claims 1 to 5, further comprising a bottom guard plate (5), and the bottom guard plate (5) is sandwiched between a cavity bottom of the receiving cavity (110) and the liquid cooling plate (3).

11. The integrated battery pack according to claim 1, wherein the box body (1) comprises a box bottom (11) and a box cover (12);
wherein the box bottom (11) comprises a bottom plate (111), four side plates (112), and at least one side beam (113);
the bottom plate (111) is a square flat plate, the four side plates (112) are arranged around the bottom plate (111), and the receiving cavity (110) is enclosed by the bottom plate (111) and the four side plates (112);
wherein two side plates (112) opposite to each other in the Y direction are configured in an "L" shape;
each of the two side plates (112) comprises a vertical plate and a horizontal plate perpendicular to each other; a free end of the horizontal plate extends in a direction facing away from the receiving cavity (110);
a plurality of side beams (113) are arranged, the plurality of side beams (113) are spaced on the "L"-shaped side plates, and each of the plurality of side beams (113) is fixed to the vertical plate and the horizontal plate.

12. The integrated battery pack according to claim 7, wherein the battery module (2) further comprises a cells contact system, CCS, component (24) and an insulating sheet (25);
wherein the CCS component (24) is connected to terminals of the battery cells (21) and is used for collecting voltage data and temperature data of the battery cells (21);
the CCS component (24) is disposed on the top of the battery module (2); and
the insulating sheet (25) covers the CCS component (24) for insulation protection.

13. The integrated battery pack according to claim 12, further comprising a battery disconnect unit, BDU, electrical component (6);
wherein the BDU electrical component (6) comprises a copper bar (61), wherein a length of the copper bar (61) extends in a length direction of the box body (1), and four battery modules (2) are arranged in groups of two on both sides of the copper bar (61).

14. The integrated battery pack according to claim 13, wherein a support plate (41) is provided between two adjacent battery modules (2);
two ends of the support plate (41) are connected to batten strips (4) on the two adjacent battery modules (2), respectively; and
a mounting slot (9) is formed between the support plate (41) and the batten strips (4), and the copper bar (61) is mounted in the mounting slot (9).

15. An electric vehicle, comprising a vehicle body, a seat, and an integrated battery pack according to any one of claims 1 to 14, wherein the integrated battery pack is arranged on the vehicle body, and the seat is mounted on a top of a box body of the integrated battery pack.
